Europäisches Patentamt

European Patent Office

Office européen des brevets

(19)

(11) **EP 0 861 157 B1**

(12) **EUROPÄISCHE PATENTSCHRIFT**

(45) Veröffentlichungstag und Bekanntmachung des Hinweises auf die Patenterteilung:
**20.02.2002 Patentblatt 2002/08**

(21) Anmeldenummer: **96938999.8**

(22) Anmeldetag: **09.11.1996**

(51) Int Cl.⁷: **B60B 17/00**

(86) Internationale Anmeldenummer:
**PCT/EP96/04907**

(87) Internationale Veröffentlichungsnummer:
**WO 97/18096 (22.05.1997 Gazette 1997/22)**

(54) **EINSTÜCKIGES SCHIENENRAD**

SINGLE-MEMBERED RAIL WHEEL

ROUE MONOBLOC SUR RAIL

(84) Benannte Vertragsstaaten:
**AT BE CH DE DK ES FR GB IT LI LU NL PT SE**

(30) Priorität: **13.11.1995 DE 19542251**

(43) Veröffentlichungstag der Anmeldung:
**02.09.1998 Patentblatt 1998/36**

(73) Patentinhaber: **Gutehoffnungshütte Radsatz GmbH**
**46145 Oberhausen (DE)**

(72) Erfinder:
• **STÜWING, Dieter**
**D-01824 Rosenthal (DE)**

• **HÖLZL, Georg**
**D-81247 München (DE)**

(74) Vertreter: **Zapf, Christoph, Dipl.-Ing.**
**Patentanwälte Dr. Solf und Zapf Postfach 13 01 13**
**42028 Wuppertal (DE)**

(56) Entgegenhaltungen:
**EP-A- 0 111 212**      **WO-A-93/13952**
**DE-A- 2 708 411**      **FR-A- 633 519**
**FR-A- 890 304**       **FR-A- 2 485 993**
**GB-A- 399 003**

EP 0 861 157 B1

**Beschreibung**

Die Erfindung betrifft ein einstückiges Schienenrad mit einem Radkranz und einer Radnabe, die einstückig miteinander verbunden sind und aus Metall bestehen. Dabei geht die Radscheibe mit je einem Übergangsbereich in die Radnabe und den Radkranz über. Die Radscheibe weist eine in tangentialer Richtung verlaufende Wellung mit Wellenbergen und Wellentälern auf, die sich jeweils in radialer Richtung erstrecken.

Im Rahmen der Weiterentwicklung des Eisenbahntransports ist man bemüht, den Schienenverkehrslärm zu minimieren. Insbesondere durch die zunehmend höheren Fahrgeschwindigkeiten können erhebliche Rollgeräusche der Schienenräder verursacht werden, die gegebenenfalls Lärmschutzgrenzwerte überschreiten.

Eine Möglichkeit der Verringerung des Schienenverkehrslärms besteht in passiven Maßnahmen. Dabei wird versucht, durch schallabsorbierende Mittel den Schalldruckpegel der Rollgeräusche zu minimieren. Eine bekannte Maßnahme sieht dabei sogenannte Schallschutzwände vor, die seitlich der Schienenwege aufgebaut sind und die eine Schallabsorbtion bewirken. Allerdings stößt das Aufstellen derartiger Schallschutzwände aus ökologischen Gründen zunehmend auf Kritik.

Weit wirkungsvoller ist es, aktive Maßnahmen zur Verringerung des Schienenverkehrslärms vorzusehen. Dabei wird verursacht, eine Schallabstrahlung von vornherein zu minimieren. Wird nämlich der Schall nur in geringerem Maße erzeugt, werden keine aufwendigeren Maßnahmen zur Unterdrückung des erzeugten Schalls notwendig.

Eine Möglichkeit einer derartigen aktiven Schallminimierung besteht darin, die Räder bei Schienenfahrzeugen besonders günstig zu gestalten. Ein derart schalloptimiertes Rad wird in der Zeitschrift ZEV + DET Glas. Ann. 118 (1994) Nr. 1 Seite 20 bis 23 beschrieben.

Grundsätzlich besteht die Möglichkeit, eine Schalloptimierung bereits dadurch zu erreichen, daß der Laufkreisdurchmesser verringert wird. Bei einer derartigen Laufkreisverringerung erhöhen sich die Resonanzfrequenzen des Schienenrades und gelangen dabei gegebenenfalls in den nicht hörbaren Bereich. Außerdem wird die schallstrahlende Fläche verkleinert. Allerdings bietet eine Veränderung des Laufkreisdurchmessers den Nachteil, daß derartige Räder sich schwer in der Praxis einführen lassen.

Aus diesem Grunde wurde bei dem in der Literaturstelle vorgestellten Rad eine Radform gewählt, die vom Normalrad möglichst wenig abweicht. Bei dem schalloptimierten Rad ist der Scheibenradkörper so geformt, daß zum Radaufstandspunkt die Masse symmetrisch verteilt ist. Dieses Rad ist gegenüber dem Normalrad mit stärkeren Korbbogenausrundungen der Übergänge von der Radnabe zu der Radscheibe und von der Radscheibe zum Radkranz verändert. Außerdem wurde eine größere Dicke der Radscheibe gewählt. Mit diesem schalloptimierten Schienenrad wird eine Schallminimierung im hörbaren Bereich erreicht. Allerdings steht dem Vorteil der Schallminimierung der Nachteil einer erheblich größeren Masse des Schienenrades entgegen. Eine Massenvergrößerung der Schienenräder bedingt allerdings einen stärkeren Energieeinsatz beim Beschleunigen und Verzögern der Wagen, was aber vermieden werden soll.

Zur Gewichtsoptimierung von Schienenrädern ist die europäische Patentanmeldung 0 111 212 bekannt, in der ein Schienenrad in Leichtbauweise beschrieben ist. Dieses Schienenrad ist in radialer Richtung ungewellt. In tangentialer Richtung weist es jedoch eine Wellung auf, deren Höhe vom Radkranz zur Radnabe zunimmt und die größer als die Radscheibendicke ist. Am Radkranz und an der Radnabe läuft die Radscheibe mit großen Übergangsradien aus. Bei diesem Schienenrad handelt es sich um ein Vollrad, welches aus Stahl besteht. Zugunsten einer möglichst kleinen Wanddicke wird eine Höhe der Wellenwellung der Radscheibe gewählt, die nur ein Zehntel bis ein Sechstel der Radkranzbreite beträgt, wobei die Höhe der Wellung in Richtung der Radnabe mindestens im Verhältnis 2 : 1 zunimmt. Die Mittenebene der gewellten Radscheibe ist eben und liegt senkrecht zur Radachse.

Obwohl mit diesem Rad eine leichte Herstellbarkeit erreicht wird und es eine hohe radiale und axiale Steifigkeit aufweist, die den Materialaufwand minimieren läßt und den Einsatz von Sondermaterialien vermeidet, trägt dieses Rad nicht zu einer Verringerung der Schallabstrahlung bei.

Aus FR-A-6 335 19 ist ein gattungsgemässes Schienenrad bekannt.

Der Erfindung liegt die Aufgabe zugrunde, ein einstückiges Schienenrad zu schaffen, das bei einer ausreichend hohen Betriebssicherheit und Vermeidung einer größeren Radmasse die Abstrahlung von hörbarem Schall minimiert.

Gemäß der Erfindung wird die Aufgabe dadurch gelöst, daß die Radscheibe mit mindestens sechs und höchstens vierzehn Wellen versehen ist und die Wellen der Radscheibe einen als Wellenhöhe h bezeichneten Abstand an einem Wellenberg oder Wellental zwischen der Wanddickenmitte m der Radscheibe und einer Mittelebene M der Radscheibe aufweisen, der zu einer Radkranzbreite a die Bedingung

$$\frac{1}{5} < \frac{h}{a} < \frac{1}{2}, \text{ vorzugsweise } \frac{1}{4} < \frac{h}{a} < \frac{1}{2}$$

erfüllt.

Weitere Ausführungsformen sind in den Unteransprüchen 3 bis 10 angegeben.

Ein einstückiges Rad mit dieser Gestaltung kann mit herkömmlichen Fertigungsverfahren kostengünstig hergestellt werden. Ein derartiges einstückiges Schienenrad kann nach Erreichen des Laufflächengrenzmaßes derart regeneriert werden, daß ein neuer Randkranz aufgebracht wird.

Die erfindungsgemäße Gestaltung des Schienenrades bewirkt, daß das Eigenfrequenzspektrum des Schienenrades so beeinflußt wird, daß insbesondere die Eigenfrequenz von hauptsächlich axialen und radialen Schwingformen mit zwei und mehr Durchmesserknoten und weniger als drei Kreisknoten so verändert werden, daß sie beim Abrollen des Rades auf der Schiene mit einer vorgegebenen Geschwindigkeit keine Resonanz mit dem niedrigen Vielfachen, das heißt dem zwei- bis sechsfachen, der Grunderregerfrequenz haben. Die Grunderregerfrequenz erhält man aus der Geschwindigkeit des Radmittelpunktes dividiert durch die Wellenlänge der periodischen Störungen auf der Schiene. Zum Beispiel können derartige periodische Störungen auf der Schiene sogenannte Schienenriffel darstellen.

Die hauptsächlich radialen Schwingformen haben infolge der zur Mittenebene des Rades symmetrischen Wellung eine geringe Kopplung mit den axialen Verformungen des Rades und haben deshalb einen geringen Anteil an der gesamten Schallabstrahlung des Rades.

Die Radscheibe weist auf der dem Radkranz zugewandten Außenseite vor dem Übergangsbereich zum Radkranz eine Wanddicke von 18 bis 32 mm, vorzugsweise 22 bis 32 mm auf. Die Wanddicke der Radscheibe auf der der Radnabe zugewandten Innenseite vor dem Übergangsbereich zur Radnabe beträgt 14 bis 29 mm, vorzugsweise 18 bis 29 mm. Der radiale Wanddickenverlauf ist dadurch gekennzeichnet, daß die dem Radkranz zugewandte Dicke immer größer ist als die der Radnabe zugewandte. Die Übergangsbereiche weisen einen Übergangsbogen und einen Bereich eines stetigen Überganges von der Radscheibe zu dem Übergangsbogen auf, wobei der Übergangsbogen einer Spline-Funktion genügt. Die Nullamplituden bzw. Mittelpunkte der Wellen zwischen Wellenberg und Wellental liegen auf der Mittelebene der Radscheibe. Die Mittelebene der Radscheibe selbst steht senkrecht auf der Radachse und verläuft durch den Schwerpunkt des Radkranzes.

In einer besonders günstigen Ausgestaltung der Erfindung ist vorgesehen, daß die Wellen eine Sinuswellenform aufweisen. Es besteht jedoch in einer weiteren Ausführungsform auch die Möglichkeit, den Wellen eine Mäanderform zu verleihen. Diese Mäanderform kann dabei rechteckig oder trapezförmig sein.

Diese beschriebenen Wellenformen beziehen sich immer auf die Formen, die die Radscheibe bei einem tangentialen Querschnitt aufweist.

Eine weitere Variante der Erfindung ist dadurch gekennzeichnet, daß die Radscheibe derart gewölbt ist, daß die Wanddickenlinien, das heißt die Verbindungslinien der Wanddickenmitten in den Wellenbergen und/oder Wellentälern, gekrümmt sind.

Dadurch besteht die Möglichkeit, daß die Wellenberge oder Wellentäler jeweils wahlweise eine Krümmung nach außen oder innen erfahren und somit eine zusätzliche Schallabstrahlung verringert werden kann.

Besonders zweckmäßig ist es hierbei, vorzusehen, daß die Wanddickenlinien nach außen gekrümmt sind.

In einer weiteren günstigen Ausgestaltung der Erfindung ist vorgesehen, daß die Wellenhöhe in radialer Richtung annähernd konstant ist. Damit wird in besonders günstiger Weise eine Schallabstrahlung minimiert.

Eine bevorzugte Ausführungsform der Erfindung sieht vor, daß die Wanddicke der Radscheibe im gedachten Verlauf der Welle zwischen Wellenberg und Wellental verschiedene Werte aufweist. Insbesondere ist es hierbei denkbar, daß die Wanddicke im Bereich der Wellenberge und der Wellentäler größer ist als in den Übergangsbereichen. Mit einer derartigen Gestaltung wird das Resonanzspektrum des Rades in besonders günstiger Weise dahingehend beeinflußt, daß die Abstrahlung von Schall weitgehend minimiert ist.

Die Erfindung soll nachfolgend anhand eines Ausführungsbeispiele näher erläutert werden. In den zugehörigen Zeichnungen zeigt

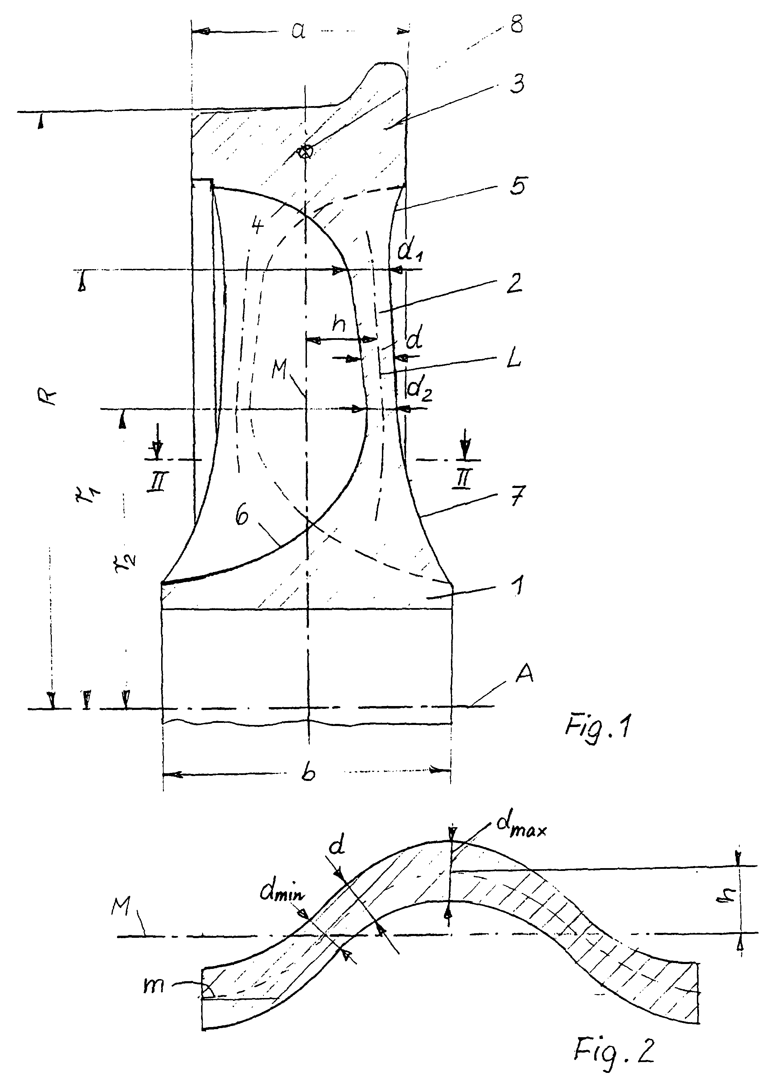

Fig. 1    einen halben Radialschnitt eines erfindungsgemäßen Schienenrades und

Fig. 2    einen Ausschnitt in Umfangsrichtung des erfindungsgemäßen Rades im Bereich der Radscheibe auf der Linie II-II der Fig. 1.

Das einstückige Schienenrad besteht aus einer Radnabe 1, einer Radscheibe 2 und einem Radkranz 3. Alle drei Teile sind einstückig miteinander verbunden.

Die Radnabe 2 weist eine Wanddicke d auf. Diese Wanddicke d nimmt in radialer Richtung von der Radnabe 1 in Richtung zum Radkranz 3 zu. Mit Übergangsbögen 4 und 5 geht die Radscheibe von ihrer Wanddicke $d_1$ in die Breite des Radkranzes a über. In gleicher Weise geht an den Übergangsbögen 6 und 7 die Radscheibe 2 von ihrer Wanddicke $d_2$ in die Breite b der Radnabe 1 über. Die in der Figur dargestellten Radien können dabei z.B. R = 460 mm, $r_1$ = 340 mm und das Verhältnis $r_2$ = 255 mm bzw.
$r_1/R$ = 0,7 bis 0,8 und $r_2/R$ = 0,5 bis 0,6 betragen.

Die Radscheibe 2 ist in tangentialer Richtung gewellt. Die Wellenhöhe h bestimmt sich aus dem Abstand zwischen der Wanddickenmitte m der Radscheibe 2 an einem Wellenberg oder Wellental zu einer Mittelebene M der Radscheibe 2, die zugleich Mittelebene des Schienenrades selbst ist oder zumindest durch den Schwerpunkt 8 des Radkranzes 3 verläuft. Die Mittelebene M der Radscheibe 2 steht senkrecht auf der Mittelachse A des Schienenrades.

Die Wellenhöhe h nimmt im Ausführungsbeispiel in radialer Richtung von der Radnabe 1 zum Radkranz 3 hin ab. Insbesondere ist hierbei die Wanddickenlinie L, das heißt die Verbindungslinie aller Wanddickenmittelpunkte in den Wellenbergen und/oder Wellentälern, nach außen gekrümmt.

Durch die Anzahl der vollen tangentialen Wellungen, die Wellenhöhe h, deren radiale Änderung, die Wanddicke d sowie deren radiale und tangentiale Änderungen und die Gestaltung der Übergangsbögen 4 bis 7, die alle einer Spline-Funktion genügen, wird das Eigenfrequenzspektrum des erfindungsgemäßen Schienenrades in einer solchen Art beeinflußt, daß die akustisch relevanten Schwingformen des Schienenrades für einen vorgegebenen Geschwindigkeitsbereich des Radmittelpunktes auf der Schiene nicht in Resonanz erregt werden. Durch die Einhaltung der erfindungsgemäßen Parameter der genannten Werte wird eine schalltechnisch optimale Konstruktion des Schienenrades in einem Geschwindigkeitsbereich von ca. 120 km/h für den Güterzugverkehr und ca. 240 km/h für den schnellen Reisezugverkehr erreicht.

**Bezugszeichenliste:**

| 1 | Radnabe |
|---|---|
| 2 | Radscheibe |
| 3 | Radkranz |
| 4 | Übergangsbogen |
| 5 | Übergangsbogen |
| 6 | Übergangsbogen |
| 7 | Übergangsbogen |
| 8 | Flächenschwerpunkt des Radkranzes |
| a | Breite des Radkranzes |
| b | Breite der Radnabe |
| $d$, $d_1$, $d_2$; dmax, dmin | Wanddicke |
| h | Wellenhöhe |
| m | Wanddickenmitte |

| A | Mittelachse des Schienenrades |
|---|---|
| L | Wanddickenlinie |
| M | Mittelebene der Radscheibe |

**Patentansprüche**

1. Einstückiges Schienenrad mit einem Radkranz, einer Radscheibe und einer Radnabe, die einstückig miteinander verbunden sind und aus Metall bestehen, wobei die Radscheibe mit je einem Übergangsbereich in die Radnabe und den Radkranz übergeht und eine in tangentialer Richtung verlaufende Wellung mit Wellenbergen und Wellentälern, die sich jeweils in radialer Richtung erstrecken, aufweist, wobei die Radscheibe (2) mit mindestens sechs und höchstens vierzehn Wellen versehen ist, **dadurch gekennzeichnet, daß** die Wellen der Radscheibe (2) einen als Wellenhöhe (h) bezeichneten Abstand an einem Wellenberg oder Wellental zwischen der Wanddickenmitte (m) der Radscheibe (2) und einer Mittelebene (M) der Radscheibe (2) aufweisen, der zu der Radkranzbreite (a) die Bedingung

$$\frac{1}{5} < \frac{h}{a} < \frac{1}{2}$$

erfüllt.

2. Einstückiges Schienenrad nach Anspruch 1, **dadurch gekennzeichnet, daß** das Verhältnis Wellenhöhe (h) zu Radkranzbreite (a) die Bedingung

$$\frac{1}{4} < \frac{h}{a} < \frac{1}{2}$$

erfüllt.

**3.** Einstückiges Schienenrad nach Anspruch 1 oder 2, **dadurch gekennzeichnet, daß** die Radscheibe (2) auf der dem Radkranz (3) zugewandten Außenseite vor dem Übergangsbereich zum Radkranz (3) eine Wanddicke ($d_1$) von 18 bis 32 mm und auf der der Radnabe (1) zugewandten Innenseite vor dem Übergangsbereich zu der Radnabe (1) eine Wanddicke ($d_2$) von 14 bis 29 mm aufweist.

**4.** Einstückiges Schienenrad nach Anspruch 1, 2 oder 3, **dadurch gekennzeichnet, daß** die Wanddicke ($d_1$) 22 bis 32 mm und die Wanddicke ($d_2$) 18 bis 29 mm beträgt.

**5.** Einstückiges Schienenrad nach mindestens einem der Ansprüche 1 bis 4, **dadurch gekennzeichnet, daß** die Übergangsbereiche einen Übergangsbogen (4 bis 7) und einen Bereich eines stetigen Überganges der Radscheibe (2) zu dem Übergangsbogen (4 bis 7) aufweisen, wobei der Übergangsbogen (4 bis 7) einer Spline-Funktion genügt.

**6.** Einstückiges Schienenrad nach mindestens einem der Ansprüche 1 bis 5, **dadurch gekennzeichnet, daß** alle Nullamplituden der Wellen zwischen Wellenberg und Wellental auf der Mittelebene (M) der Radscheibe (2) liegen und die Mittelebene (M) der Radscheibe (2) durch den Schwerpunkt des Radkranzes (3) verläuft.

**7.** Einstückiges Schienenrad nach mindestens einem der Ansprüche 1 bis 6, **dadurch gekennzeichnet, daß** die Wellen eine Sinuswellenform oder eine rechteckige bzw. trapezförmige Mäanderform aufweisen.

**8.** Einstückiges Schienenrad nach mindestens einem der Ansprüche 1 bis 7, **dadurch gekennzeichnet, daß** die Radscheibe (2) derart gewölbt ist, daß die Wanddickenlinien (L), das heißt die Verbindungslinien der Wanddickenmitten (m), in den Weifenbergen und/oder Wellentälern nach außen gekrümmt sind.

**9.** Einstückiges Schienenrad nach mindestens einem der Ansprüche 1 bis 8, **dadurch gekennzeichnet, daß** die Wellenhöhe (h) in radialer Richtung annähernd konstant ist.

**10.** Einstückiges Schienenrad nach mindestens einem der Ansprüche 1 bis 9, **dadurch gekennzeichnet, daß** im Bereich der Wellenberge und Wellentäler die Wanddicke (d) am größten ist.

**Claims**

**1.** Single-piece rail wheel having a wheel flange, a wheel disc and wheel hub which are connected to one another to form one piece and are composed of metal, the wheel disc merging with the wheel hub and the wheel rim in a junction region in each case, and having a corrugation which runs in the tangential direction and has wave peaks and wave troughs which each extend in the radial direction, the wheel disc (2) being provided with at least six, and at most fourteen, corrugations, **characterized in that** the corrugations of the wheel disc (2) are at a distance, designated as a corrugation height (h) from a wave peak or wave trough between the centre (m) of the wall thickness of the wheel disc (2) and a centre plane (M) of the wheel disc (2), which distance fulfils the condition

$$\frac{1}{5} < \frac{h}{a} < \frac{1}{2}$$

with respect to the width (a) of the wheel rim.

**2.** Single-piece rail wheel according to. Claim 1, **characterized in that** the ratio of the corrugation height (h) to the width (a) of the wheel rim fulfils the condition

$$\frac{1}{4} < \frac{h}{a} < \frac{1}{2}.$$

**3.** Single-piece rail wheel according to Claim 1 or 2, **characterized in that** the wheel disc (2) has a wall thickness

($d_1$) of 18 to 32 mm on the outside facing the wheel rim (3) and before the junction region to the wheel rim (3), and a wall thickness ($d_2$) of 14 to 29 mm on the inner side facing the wheel hub (1) and before the junction region to the wheel hub (1).

4.  Single-piece rail wheel according to Claim 1,2 or 3, **characterized in that** the wall thickness ($d_1$) is 22 to 32 mm, and the wall thickness ($d_2$) is 18 to 29 mm.

5.  Single-piece rail wheel according to at least one of Claims 1 to 4, **characterized in that** the junction regions have a transition arc (4 to 7). and a region of constant transition between the wheel disc (2) and the transition arc (4 to 7), the transition arc (4 to 7) fulfilling a spline function.

6.  Single-piece rail wheel according to at least one of Claims 1 to 5, **characterized in that** all the zero amplitudes of the corrugations lie between the wave peak and wave trough on the centre plane (M) of the wheel disc (2), and the centre plane (M) of the wheel disc (2) passes through the centre of gravity of the wheel rim (3).

7.  Single-piece rail wheel according to at least one of Claims 1 to 6, **characterized in that** the corrugations have a sine wave shape or a rectangular or trapezoidal meandering shape.

8.  Single-piece rail wheel according to at least one of Claims 1 to 7, **characterized in that** the wheel disc (2) is arched in such a way that the lines (L) of the wall thickness, that is to say the connecting lines of the centres (m) of the wall thicknesses are curved outwards at the wave peaks and/or wave troughs.

9.  Single-piece rail wheel according to at least one of Claims 1 to 8, **characterized in that** the corrugation height (h) is approximately constant in the radial direction.

10. Single-piece rail wheel according to at least one of Claims 1 to 9, **characterized in that** the wall thickness (d) is at a maximum in the region of the wave peaks and wave troughs.

**Revendications**

1.  Roue ferroviaire monobloc comprenant une jante, une toile et un moyeu qui sont réunis en une seule pièce et sont faits de métal, la toile se raccordant au moyeu et à la jante par une région de raccordement et présentant une ondulation s'étendant dans la direction tangentielle, qui possède des sommets d'onde et des creux d'onde qui s'étendent chacun dans une direction radiale, la toile (2) étant munie d'au moins six et d'au plus quatorze ondes, **caractérisée en ce que** les ondes de la toile présentent une distance, appelée hauteur d'onde (h), mesurée sur un sommet d'onde ou sur un creux d'onde, entre le milieu de l'épaisseur de paroi (m) de la toile et un plan médian (M) de la toile, qui remplit, par rapport à une largeur (a) de la jante de la roue, la condition :

$$\frac{1}{5} < \frac{h}{a} < \frac{1}{2}$$

2.  Roue ferroviaire monobloc selon la revendication 1,
    **caractérisée en ce que** le rapport de la hauteur d'onde (h) à la largeur (a) de la jante de la roue remplit la condition

$$\frac{1}{4} < \frac{h}{a} < \frac{1}{2}.$$

3.  Roue ferroviaire monobloc selon la revendication 1 ou 2,
    **caractérisée en ce que** la toile (2) de la roue présente, sur le côté extérieur dirigé vers la jante (3) de la roue, avant la zone de raccordement à la jante (3), une épaisseur de paroi ($d_1$) de 18 à 32 mm et, sur le côté intérieur, dirigé vers le moyeu (1) de la roue, avant la région de raccordement avec le moyeu (1), une épaisseur de paroi ($d_2$) de 14 à 29 mm.

4.  Roue ferroviaire monobloc selon la revendication 1, 2 ou 3,
    **caractérisée en ce que** l'épaisseur de paroi ($d_1$) vaut 22 à 32 mm et l'épaisseur de paroi ($d_2$) 18 à 29 mm.

5. Roue ferroviaire monobloc selon au moins une des revendications 1 à 4,
**caractérisée en ce que** les régions de raccordement présentent un arc de raccordement (4 à 7) et une région d'un raccordement constant de la toile (2) à l'arc de raccordement (4 à 7), l'arc de raccordement (4 à 7) satisfaisant à une fonction spline.

6. Roue ferroviaire monobloc selon au moins une des revendications 1 à 5,
**caractérisée en ce que** toutes les amplitudes nulles des ondes entre le sommet d'onde et le creux d'onde se trouvent sur le plan médian (M) de la toile (2), et le plan médian (M) de la toile (2) passe par le centre de gravité de la jante (3).

7. Roue ferroviaire monobloc selon au moins une des revendications 1 à 6,
**caractérisée en ce que** les ondes ont une forme d'onde sinusoïdale ou une forme de méandre rectangulaire ou trapézoïdale.

8. Roue ferroviaire monobloc selon au moins une des revendications 1 à 7,
**caractérisée en ce que** la toile (2) de la roue est bombée de manière que les lignes d'épaisseur de paroi (L) c'est-à-dire les lignes de liaison joignant les milieux d'épaisseur de paroi (m) sont courbées vers l'extérieur dans les sommets d'onde et/ou les creux d'onde.

9. Roue ferroviaire monobloc selon au moins une des revendications 1 à 8,
**caractérisée en ce que** la hauteur d'onde (h) est approximativement constante dans la direction radiale.

10. Roue ferroviaire monobloc selon au moins une des revendications 1 à 9,
**caractérisée en ce que** l'épaisseur de paroi (d) est la plus grande dans la région des sommets d'onde et des creux d'ondes.

Fig.1

Fig.2